# EUROPEAN PATENT APPLICATION

(11) **EP 3 923 227 A1**
(43) Date of publication of application: **15.12.2021**
(21) Application number: 21162707.0
(22) Date of filing: 16.03.2021
(51) Int. Cl.: G06Q 30/02, G06Q 30/06

(54) **DETERMINING CATEGORIES FOR DATA OBJECTS BASED ON MACHINE LEARNING**

(30) Priority: 11.06.2020 US 202016899434
(71) Applicant: SAP SE, 69190 Walldorf (DE)
(72) Inventor: WOOD, Cynthia, 69190 Walldorf (DE); NGUYEN, Bryan, 69190 Walldorf (DE); WYKOFF, Victor, 69190 Walldorf (DE); PARAMESWARA, Rao Tatini, 69190 Walldorf (DE); FONG, Nicholas, 69190 Walldorf (DE)
(74) Representative: Müller-Boré & Partner Patentanwälte PartG mbB

(57) **Abstract**

Some embodiments provide a non-transitory machine-readable medium that stores a program. The program retrieves a plurality of transaction data from a storage. Each transaction data in the plurality of transaction data includes an item and an amount associated with the item. Based on the plurality of transaction data, the program further determines a set of range of amounts. Based on the set of range of amounts and a set of data objects, the program also determining a set of categories. Each data object in the set of data objects belongs to a category in the set of categories.

## Description

### BACKGROUND

Machine learning (ML) is a subset of artificial intelligence that involves the study of computer algorithms that improve automatically through experience. For example, ML algorithms can build a mathematical model based on sample data (also referred to as training data) in order to make predictions or decisions without being explicitly programmed to do so. These types of ML algorithms are commonly referred to as supervised learning ML algorithms. Another type of ML algorithm identify hidden patterns in a data set with no pre-existing labels and with little to no human supervision. These types of ML algorithms are commonly referred to as unsupervised learning ML algorithms. ML algorithms have a number of different applications. For instance, ML algorithms may be used for email filtering, sentiment analysis, fraud detection, computer vision, handwriting recognition, search engines, etc.

### SUMMARY

In some embodiments, a non-transitory machine-readable medium stores a program executable by at least one processing unit of a device. The program retrieves a plurality of transaction data from a storage. Each transaction data in the plurality of transaction data includes an item and an amount associated with the item. Based on the plurality of transaction data, the program further determines a set of range of amounts. Based on the set of range of amounts and a set of data objects, the program also determining a set of categories. Each data object in the set of data objects belongs to a category in the set of categories.

In some embodiments, determining the set of range of amounts may include determining the set of range of amounts using a Bayesian Blocks algorithm. The program may further, based on the amounts in the plurality of transaction data, determine a set of unique amounts; sort the set of unique amounts from smallest to largest; for each pair of successive unique amounts in the set of unique amounts, determine a midpoint between the pair of successive unique amounts; and use the midpoints as inputs to the Bayesian Blocks algorithm.

In some embodiments, determining the set of categories may include using a hierarchical density-based cluster selection (HDBSCAN) algorithm. The set of data objects may include a set of users. The program may further receive, from a client device, a request for a plurality of recommended item for a user; determine the category associated with the user; identify transaction data associated with a set of users, wherein each user in the set of users may be associated with the category; determine a defined number of items having the most instances in the identified transaction data; and provide the defined number of items to the client device.

In some embodiments, the set of data objects may include a set of users associated with a first tenant, the plurality of transaction data may be a first plurality of transaction data associated with the first tenant, the set of range of amounts may be a first set of range of amounts, and the set of categories may be a first set of categories. The program may further retrieve a second plurality of transaction data associated with a second tenant from the storage. Each transaction data in the second plurality of transaction data comprising an item and an amount associated with the item. Based on the second plurality of transaction data, the program may also determine a second set of range of amounts. Based on the second set of range of amounts and a second set of data objects associated with the second tenant, the program may further determine a second set of categories. Each data object in the second set of data objects may belong to a category in the second set of categories. Determining the set of categories may be further based on a set of activity data.

In some embodiments, a method retrieves a plurality of transaction data from a storage. Each transaction data in the plurality of transaction data includes an item and an amount associated with the item. Based on the plurality of transaction data, the method further determines a set of range of amounts. Based on the set of range of amounts and a set of data objects, the method also determines a set of categories. Each data object in the set of data objects belongs to a category in the set of categories.

In some embodiments, determining the set of range of amounts may include determining the set of range of amounts using a Bayesian Blocks algorithm. The method may further, based on the amounts in the plurality of transaction data, determine a set of unique amounts; sorts the set of unique amounts from smallest to largest; for each pair of successive unique amounts in the set of unique amounts, determine a midpoint between the pair of successive unique amounts; and use the midpoints as inputs to the Bayesian Blocks algorithm.

In some embodiments, determining the set of categories may include using a hierarchical density-based cluster selection (HDBSCAN) algorithm. The set of data objects may include a set of users. The method may further receive, from a client device, a request for a plurality of recommended item for a user; determine the category associated with the user; identify transaction data associated with a set of users, wherein each user in the set of users may be associated with the category; determine a defined number of items having the most instances in the identified transaction data; and provide the defined number of items to the client device.

In some embodiments, the set of data objects may include a set of users associated with a first tenant, the plurality of transaction data may be a first plurality of transaction data associated with the first tenant, the set of range of amounts may be a first set of range of amounts, and the set of categories may be a first set of categories. The method may further retrieve a second plurality of transaction data associated with a second tenant from the storage. Each transaction data in the second plurality of transaction data may include an item and an amount associated with the item. Based on the second plurality of transaction data, the method may also determine a second set of range of amounts. Based on the second set of range of amounts and a second set of data objects associated with the second tenant, the method may further determine a second set of categories. Each data object in the second set of data objects belongs to a category in the second set of categories. Determining the set of categories may be further based on a set of activity data.

In some embodiments, a system includes a set of processing units and a non-transitory machine-readable medium that stores instructions. The instructions cause at least one processing unit to retrieve a plurality of transaction data from a storage. Each transaction data in the plurality of transaction data includes an item and an amount associated with the item. Based on the plurality of transaction data, the instructions further cause the at least one processing unit to determine a set of range of amounts. Based on the set of range of amounts and a set of data objects, the instructions also cause the at least one processing unit to determine a set of categories, wherein each data object in the set of data objects belongs to a category in the set of categories.

In some embodiments, determining the set of range of amounts may include determining the set of range of amounts using a Bayesian Blocks algorithm. The instructions may further cause the at least one processing unit to, based on the amounts in the plurality of transaction data, determine a set of unique amounts; sort the set of unique amounts from smallest to largest; for each pair of successive unique amounts in the set of unique amounts, determine a midpoint between the pair of successive unique amounts; and use the midpoints as inputs to the Bayesian Blocks algorithm.

In some embodiments, determining the set of categories may include using a hierarchical density-based cluster selection (HDBSCAN) algorithm. The set of data objects may include a set of users. The instructions may further cause the at least one processing unit to receive, from a client device, a request for a plurality of recommended item for a user; determine the category associated with the user; identify transaction data associated with a set of users, wherein each user in the set of users is associated with the category; determine a defined number of items having the most instances in the identified transaction data; and provide the defined number of items to the client device.

In some embodiments, the set of data objects may include a set of users associated with a first tenant, the plurality of transaction data may be a first plurality of transaction data associated with the first tenant, the set of range of amounts may be a first set of range of amounts, and the set of categories may be a first set of categories. The instructions may further cause the at least one processing unit to retrieve a second plurality of transaction data associated with a second tenant from the storage. Each transaction data in the second plurality of transaction data may include an item and an amount associated with the item. Based on the second plurality of transaction data, the instructions may also cause the at least one processing unit to determine a second set of range of amounts. Based on the second set of range of amounts and a second set of data objects associated with the second tenant, the instructions may further cause the at least one processing unit to determine a second set of categories. Each data object in the second set of data objects may belong to a category in the second set of categories.

The following detailed description and accompanying drawings provide a better understanding of the nature and advantages of various embodiments of the present disclosure.

### BRIEF DESCRIPTION OF THE DRAWINGS

FIG. 1 illustrates a system for determining categories for data objects according to some embodiments.
FIG. 2 illustrates an example dataflow through the system illustrated in FIG. 1 according to some embodiments.
FIG. 3 illustrates a graphical user interface (GUI) that includes example item recommendations for a user according to some embodiments.
FIG. 4 illustrates a process for determining categories according to some embodiments.
FIG. 5 illustrates an exemplary computer system, in which various embodiments may be implemented.
FIG. 6 illustrates an exemplary computing device, in which various embodiments may be implemented.
FIG. 7 illustrates an exemplary system, in which various embodiments may be implemented.

### DETAILED DESCRIPTION

In the following description, for purposes of explanation, numerous examples and specific details are set forth in order to provide a thorough understanding of the present disclosure. It will be evident, however, to one skilled in the art that various embodiment of the present disclosure as defined by the claims may include some or all of the features in these examples alone or in combination with other features described below, and may further include modifications and equivalents of the features and concepts described herein.

Described herein are techniques for determining categories for data objects based on machine learning. In some embodiments, a computing system may receive transaction data associated with transactions that occurred in a production environment, such as, for example, user purchases of items offered through an ecommerce website. The computing system can also receive activity data associated with activity in the product environment, such as, for example, the number of times users visit the ecommerce website, the time spend at various pages of the ecommerce website, etc. Based on the transaction data, the computing system may determine a set of ranges of purchase amounts made by users. Next, the computing system uses the set of ranges of purchase amounts and the activity data to determine a set of categories. Each category specifies one or more users. Then, for each category, the computing system determines a set of recommended items based on the purchase histories of the users assigned the category. Now, when a user visits the ecommerce website, the computing system can determine the set of recommended items for the user based on the user's category. The ecommerce website can provide the set of recommendations to the user.

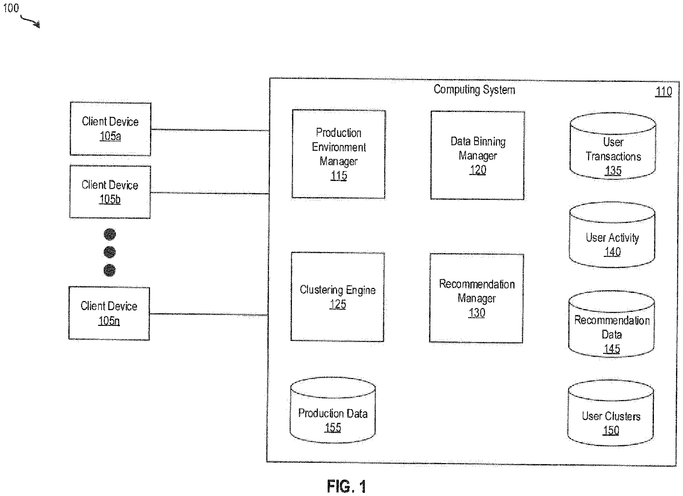

FIG. 1 illustrates a system 100 for determining categories for data objects according to some embodiments. As shown, system 100 includes client devices 105a-n and computing system 110. Client devices 105a-n are configured to communicate and interact with computing system 110. For example, a user of a client device 105 may access computing system 110 to interact with an ecommerce website (not shown) and purchase items provided by the ecommerce website. In some instances, when a user of a client device 105 sends computing system 110 a request access to a webpage of the ecommerce website, the client device 105 receives the webpage as well as a list of recommended items associated with the user.

As illustrated in FIG. 1, computing system 110 includes production environment manager 115, data binning manager 120, clustering engine 125, recommendation manager 130, and storages 135-155. User transactions storage 135 is configured to store transactions of users that occurred via the ecommerce website. For example, such transactions can include, for each user, a history of purchased items offered through an ecommerce website. Each purchased item can include the item and an amount paid for the item. User activity storage 140 stores store user activity associated with an ecommerce website. Examples of user activity include, for each user, the number of times the user visits the ecommerce website, performing different types of actions (e.g., searching for items, clicking on certain types of user interface (UI) elements, etc.), the time the user spends performing the different types of actions, etc. Recommendation data storage 145 is configured to store lists of recommendations for different users. A list of recommendations can include a list of recommended items. User clusters storage 150 stores clusters of users. Each cluster of users may be associated with a category. Production data storage 155 stores data associated with a production environment (not shown). In some embodiments, an ecommerce website is provided via the production environment. Examples of production data include user activity data, user transaction data, user profile data, user permission data, etc. In some embodiments, storages 135-155 are implemented in a single physical storage while, in other embodiments, storages 135-155 may be implemented across several physical storages. While FIG. 1 shows storages 135-155 as part of computing system 110, one of ordinary skill in the art will appreciate that user transactions storage 135, user activity storage 140, recommendation data storage 145, user clusters storage 150, and/or production data storage 155 may be external to computing system 110 in some embodiments.

Production environment manager 115 serves as an interface to a production environment (not shown). In some embodiments, the production environment is included in computing system 110. In other embodiments, the production environment is hosted on a separate computing system. Production environment manager 115 also manages the data associated with the production environment. For example, production environment manager 115 may monitor and store data associated with the production environment in production data storage 155. As mentioned above, examples of production data can include user activity data, user transaction data, user profile data, user permission data, etc. Production environment manager 115 may provide a set of application programming interfaces (APIs) through which production data can be accessed. In some cases, the production environment managed by production environment manager 115 may receive a request for a list of recommended items associated with a user. In response, production environment manager 115 forwards the request to recommendation manager 130. In return, production environment manager 115 receives a list of recommended items associated with the user and forwards it to the production environment, which forwards it to a client device 105 used by the user.

Data binning manager 120 is responsible for determining sets bins of data. In some embodiments, a bin of data is a defined range of values of data. For example, at defined intervals (e.g., once an hour, once a day, once a week, etc.), data binning manager 120 can retrieve from user transactions storage 135 transaction data of users of an ecommerce website that include, for each user, a history of purchased items offered through the ecommerce website (e.g., an ecommerce website provided by a production environment managed by production environment manager 115). Each purchased item can include the item and an amount paid for the item. Then, data binning manager 120 generates a set of range of amounts based on the amounts paid for items purchased by users through the ecommerce website. In some embodiments, data binning manager 120 uses a Bayesian Blocks algorithm to determine the set of range of amounts. In some such embodiments, data binning manager 120 determines the set of range of amounts by determining a set of unique amounts, sorts the set of unique amounts from smallest to largest, determines a midpoint between each pair of successive unique amounts, and uses the midpoints as inputs to the Bayesian Blocks algorithm. Once data binning manager 120 determines the set of range of amounts, data binning manager 120 sends them to clustering engine 125 for processing.

Clustering engine 125 is configured to determine clusters of users. For instance, when clustering engine 125 receives a set of range of amounts from data binning manager 120, clustering engine 125 retrieves activity data associated with users of the ecommerce website for which the set or range of amounts is determined. Next, clustering engine 125 determines a set of clusters of users based on the set of range of amounts and the activity data. In some embodiments, clustering engine 125 uses a hierarchical density-based cluster selection (HDBSCAN) algorithm to determine the set of clusters. The HDBSCAN algorithm determines a set of categories. Each category specifies one or more users. A particular user can belong to only one category in the set of categories. Thus, the set of categories serves as the set of clusters of users. Clustering engine 125 stores the set of clusters of users in user clusters storage 150.

Recommendation manager 130 is responsible for determining lists of recommendations for users. For example, recommendation manager 130 can receive from production environment manager 115 a request for a list of recommended items associated with a user. In response to the request, recommendation manager 130 accesses user clusters storage 150 to identify the category associated with the user and to identify all the users specified in the category. Next, recommendation manager 130 accesses user transactions storage 135 to retrieve the transaction data associated with each user specified in the category. Recommendation manager 130 then accesses production data storage 155 to retrieve user permissions associated with the user. Recommendation manager 130 filters out items the user is not allowed to access based on the user permissions. From the items that the user is allowed to access, recommendation manager 130 determines a defined number of items (e.g., five items, ten items, fifteen items, etc.) having the most instances in the identified transaction data based on the transaction data associated with the users specified in the category and sends them to production environment manager 115. Also, recommendation manager 130 stores the list of recommended item in recommendation data storage 145 so that the list can be provided to the user for subsequent visits to the ecommerce website.

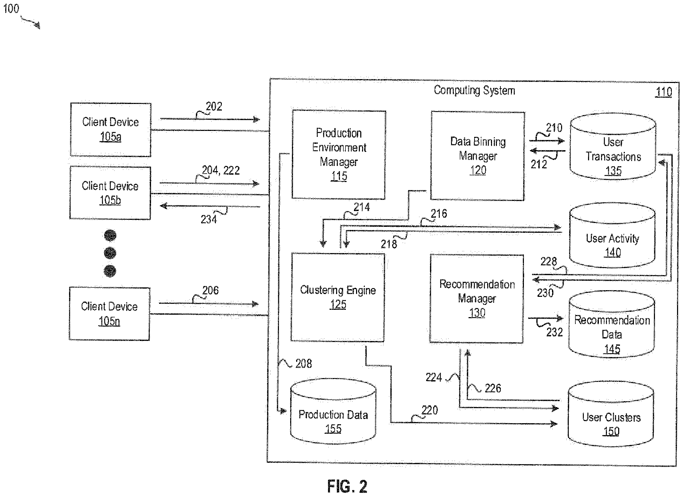

FIG. 2 illustrates an example dataflow through system 100 according to some embodiments. The dataflow starts by client devices 105a-n interacting, at 202-206, with an ecommerce website provided by a production environment managed by production environment manager 115. The interactions can include transactions completed by users of client devices 105a-n as well as activity data of users of client devices 105a-n. Production environment manager stores, at 208, these interactions in production data storage 155. Computing system 110 may access the transaction data via the set of APIs provided by production environment manager 115 and store the data in user transactions storage 135. Similarly, computing system 110 accesses the activity data and stores them in user activity storage 140.

At a defined interval, data binning manager 120 accesses, at 210, user transactions storage 135 and retrieves, at 212, transaction data of users of the ecommerce website that include purchased items offered through the ecommerce website and the amounts paid for the items. Next, data binning manager 120 generates a set of range of amounts based on the amounts paid for items using a Bayesian Blocks algorithm. For this example, data binning manager 120 determines a set of unique amounts, sorts the set of unique amounts from smallest to largest, determines a midpoint between each pair of successive unique amounts, and uses the midpoints as inputs to the Bayesian Blocks algorithm. Data binning manager 120 then sends, at 214, set of range of amounts to clustering engine 125.

Upon receiving a set of range of amounts from data binning manager 120, clustering engine 125 accesses, at 216, user activity storage 140 and retrieves, at 218, activity data associated with users of the ecommerce website. Then, clustering engine 125 determines a set of categories based on the set of range of amounts and the activity data by using a HDBSCAN algorithm where each category specifies one or more users and each user can belong to only one category in the set of categories. Next, clustering engine 125 stores, at 220, the set of clusters of users in user clusters storage 150.

In this example, at some later point in time, the production environment managed by production environment manager 115 receives, at 222, a request for a list of recommended items associated with a user of client device 105b. In response, production environment manager 115 forwards the request to recommendation manager 130. Upon receiving the request from production environment manager 115, recommendation manager 130 accesses, at 224, user clusters storage 150 to retrieve, at 226, the category associated with the user and all the users specified in the category. Recommendation manager 130 then accesses, at 228, user transactions storage 135 to retrieve, at 230, the transaction data associated with each user specified in the category. Next, recommendation manager 130 accesses production data storage 155 to retrieve user permissions associated with the user and then uses the user permissions to filter out items the user is not allowed to access. From the items that the user is allowed to access, recommendation manager 130 determines a defined number of items (e.g., five items, ten items, fifteen items, etc.) having the most instances in the identified transaction data based on the transaction data associated with the users specified in the category and stores, at 232, them in recommendation data storage 145. Next, recommendation manager 130 sends items to production environment manager 115. Production environment manager 115 forwards the list of recommended items to the production environment, which forwards, at 234, it to the user via client device 105b.

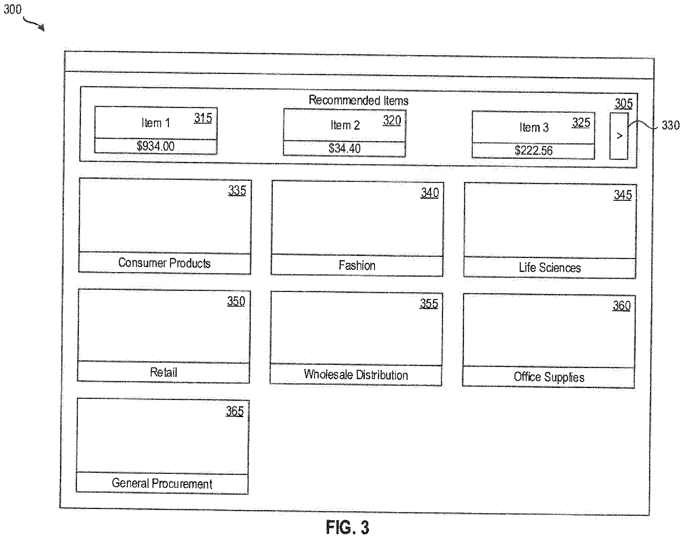

FIG. 3 illustrates a graphical user interface (GUI) 300 that includes example item recommendations for a user according to some embodiments. For this example, the production environment managed by production environment manager 115 provides GUI 300 to a client device 105 used by a user. As shown, GUI 300 includes list of recommended items 305 and selectable UI items 335-365. List of recommended items 305 is associated with the user in this example. As illustrated, list of recommended items 305 includes items 315-325 and selectable item 330. Each of the items 315-325 includes a price for the respective item. When selected, item 330 causes GUI 300 to scroll items in list of recommended items 305 to show additional recommended items. Selectable UI items 335-365 each represents a category of items. Each of the user-selectable UI items 335-365, when selected, causes GUI 300 to navigate to a page listing items belong to the corresponding category.

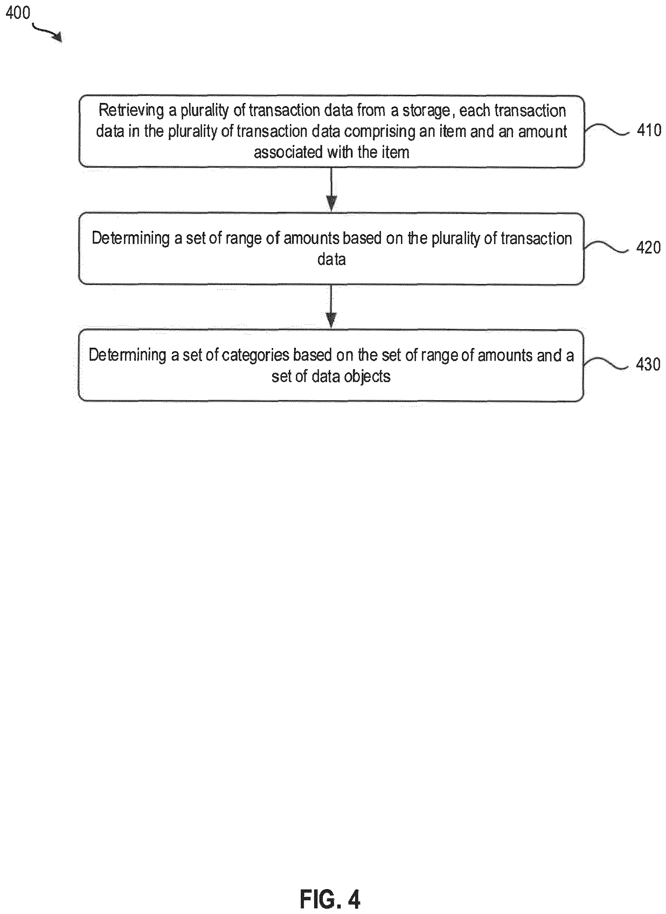

FIG. 4 illustrates a process 400 for determining categories according to some embodiments. In some embodiments, computing system 110 performs process 400. Process 400 begins by retrieving, at 410, a plurality of transaction data from a storage. Each transaction data in the plurality of transaction data includes an item and an amount associated with the item. Referring to FIG. 2 as an example, data binning manager 120 can accesses user transactions storage 135 and retrieve transaction data of users of a ecommerce website that include purchased items offered through the ecommerce website and the amounts paid for the items.

Next, process 400 determines, at 420, a set of range of amounts based on the plurality of transaction data. Referring to FIG. 2 and continuing with the example above, data binning manager 120 generates a set of range of amounts based on the amounts paid for items using a Bayesian Blocks algorithm. For instance, data binning manager 120 may determine a set of unique amounts, sort the set of unique amounts from smallest to largest, determine a midpoint between each pair of successive unique amounts, and use the midpoints as inputs to the Bayesian Blocks algorithm.

Finally, process 400 determines, at 430, a set of categories based on the set of range of amounts and a set of data objects. Each data object in the set of data objects belongs to a category in the set of categories. Referring to FIG. 2 and continuing with the example above, clustering engine 125 accesses user activity storage 140 and retrieves activity data associated with users of the ecommerce website. Clustering engine 125 then determines a set of categories based on the set of range of amounts and the activity data by using a HDBSCAN algorithm.

The embodiments and examples described above involve users of an ecommerce website. However, in some embodiments, computing system 110 can be a multi-tenant system that supports a number of different tenants that each have their own users. For example, computing system 110 may include multiple production environments that each provides a separate ecommerce website for a separate set of users. In such examples, computing system 110 keeps user data (e.g., user transaction data, user activity data, user profile data, etc.) associated with each tenant (e.g., each ecommerce website) separate. Computing system 110 utilizes the techniques described herein for each tenant. As such, computing system 110 can determine different sets of ranges, different sets of categories, and different recommendations for users associated with different tenants.

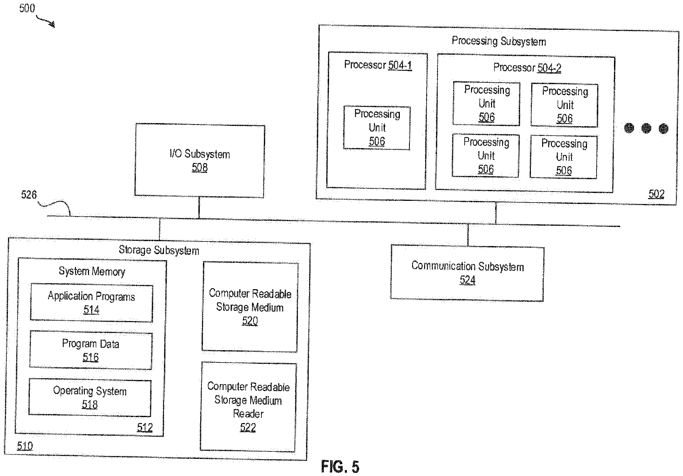

FIG. 5 illustrates an exemplary computer system 500 for implementing various embodiments described above. For example, computer system 500 may be used to implement client devices 105a-n and computing system 110. Computer system 500 may be a desktop computer, a laptop, a server computer, or any other type of computer system or combination thereof. Some or all elements of production environment manager 115, data binning manager 120, clustering engine 125, recommendation manager 130, or combinations thereof can be included or implemented in computer system 500. In addition, computer system 500 can implement many of the operations, methods, and/or processes described above (e.g., process 400). As shown in FIG. 5, computer system 500 includes processing subsystem 502, which communicates, via bus subsystem 526, with input/output (I/O) subsystem 508, storage subsystem 510 and communication subsystem 524.

Bus subsystem 526 is configured to facilitate communication among the various components and subsystems of computer system 500. While bus subsystem 526 is illustrated in FIG. 5 as a single bus, one of ordinary skill in the art will understand that bus subsystem 526 may be implemented as multiple buses. Bus subsystem 526 may be any of several types of bus structures (e.g., a memory bus or memory controller, a peripheral bus, a local bus, etc.) using any of a variety of bus architectures. Examples of bus architectures may include an Industry Standard Architecture (ISA) bus, a Micro Channel Architecture (MCA) bus, an Enhanced ISA (EISA) bus, a Video Electronics Standards Association (VESA) local bus, a Peripheral Component Interconnect (PCI) bus, a Universal Serial Bus (USB), etc.

Processing subsystem 502, which can be implemented as one or more integrated circuits (e.g., a conventional microprocessor or microcontroller), controls the operation of computer system 500. Processing subsystem 502 may include one or more processors 504. Each processor 504 may include one processing unit 506 (e.g., a single core processor such as processor 504-1) or several processing units 506 (e.g., a multicore processor such as processor 504-2). In some embodiments, processors 504 of processing subsystem 502 may be implemented as independent processors while, in other embodiments, processors 504 of processing subsystem 502 may be implemented as multiple processors integrate into a single chip or multiple chips. Still, in some embodiments, processors 504 of processing subsystem 502 may be implemented as a combination of independent processors and multiple processors integrated into a single chip or multiple chips.

In some embodiments, processing subsystem 502 can execute a variety of programs or processes in response to program code and can maintain multiple concurrently executing programs or processes. At any given time, some or all of the program code to be executed can reside in processing subsystem 502 and/or in storage subsystem 510. Through suitable programming, processing subsystem 502 can provide various functionalities, such as the functionalities described above by reference to process 400.

I/O subsystem 508 may include any number of user interface input devices and/or user interface output devices. User interface input devices may include a keyboard, pointing devices (e.g., a mouse, a trackball, etc.), a touchpad, a touch screen incorporated into a display, a scroll wheel, a click wheel, a dial, a button, a switch, a keypad, audio input devices with voice recognition systems, microphones, image/video capture devices (e.g., webcams, image scanners, barcode readers, etc.), motion sensing devices, gesture recognition devices, eye gesture (e.g., blinking) recognition devices, biometric input devices, and/or any other types of input devices.

User interface output devices may include visual output devices (e.g., a display subsystem, indicator lights, etc.), audio output devices (e.g., speakers, headphones, etc.), etc. Examples of a display subsystem may include a cathode ray tube (CRT), a flat-panel device (e.g., a liquid crystal display (LCD), a plasma display, etc.), a projection device, a touch screen, and/or any other types of devices and mechanisms for outputting information from computer system 500 to a user or another device (e.g., a printer).

As illustrated in FIG. 5, storage subsystem 510 includes system memory 512, computer-readable storage medium 520, and computer-readable storage medium reader 522. System memory 512 may be configured to store software in the form of program instructions that are loadable and executable by processing subsystem 502 as well as data generated during the execution of program instructions. In some embodiments, system memory 512 may include volatile memory (e.g., random access memory (RAM)) and/or non-volatile memory (e.g., read-only memory (ROM), programmable read-only memory (PROM), erasable programmable read-only memory (EPROM), electrically erasable programmable read-only memory

(EEPROM), flash memory, etc.). System memory 512 may include different types of memory, such as static random access memory (SRAM) and/or dynamic random access memory (DRAM). System memory 512 may include a basic input/output system (BIOS), in some embodiments, that is configured to store basic routines to facilitate transferring information between elements within computer system 500 (e.g., during start-up). Such a BIOS may be stored in ROM (e.g., a ROM chip), flash memory, or any other type of memory that may be configured to store the BIOS.

As shown in FIG. 5, system memory 512 includes application programs 514, program data 516, and operating system (OS) 518. OS 518 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Computer-readable storage medium 520 may be a non-transitory computer-readable medium configured to store software (e.g., programs, code modules, data constructs, instructions, etc.). Many of the components (e.g., production environment manager 115, data binning manager 120, clustering engine 125, and recommendation manager 130) and/or processes (e.g., process 400) described above may be implemented as software that when executed by a processor or processing unit (e.g., a processor or processing unit of processing subsystem 502) performs the operations of such components and/or processes. Storage subsystem 510 may also store data used for, or generated during, the execution of the software.

Storage subsystem 510 may also include computer-readable storage medium reader 522 that is configured to communicate with computer-readable storage medium 520. Together and, optionally, in combination with system memory 512, computer-readable storage medium 520 may comprehensively represent remote, local, fixed, and/or removable storage devices plus storage media for temporarily and/or more permanently containing, storing, transmitting, and retrieving computer-readable information.

Computer-readable storage medium 520 may be any appropriate media known or used in the art, including storage media such as volatile, non-volatile, removable, non-removable media implemented in any method or technology for storage and/or transmission of information. Examples of such storage media includes RAM, ROM, EEPROM, flash memory or other memory technology, compact disc read-only memory (CD-ROM), digital versatile disk (DVD), Blu-ray Disc (BD), magnetic cassettes, magnetic tape, magnetic disk storage (e.g., hard disk drives), Zip drives, solid-state drives (SSD), flash memory card (e.g., secure digital (SD) cards, CompactFlash cards, etc.), USB flash drives, or any other type of computer-readable storage media or device.

Communication subsystem 524 serves as an interface for receiving data from, and transmitting data to, other devices, computer systems, and networks. For example, communication subsystem 524 may allow computer system 500 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication subsystem 524 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication subsystem 524 may provide components configured for wired communication (e.g., Ethernet) in addition to or instead of components configured for wireless communication.

One of ordinary skill in the art will realize that the architecture shown in FIG. 5 is only an example architecture of computer system 500, and that computer system 500 may have additional or fewer components than shown, or a different configuration of components. The various components shown in FIG. 5 may be implemented in hardware, software, firmware or any combination thereof, including one or more signal processing and/or application specific integrated circuits.

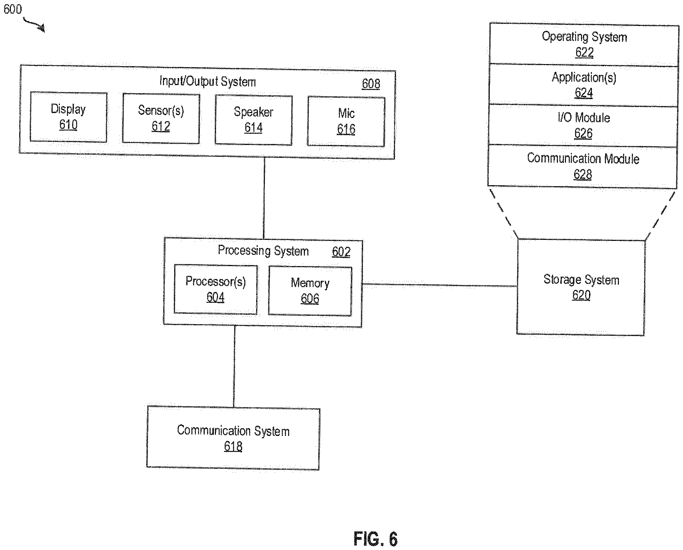

FIG. 6 illustrates an exemplary computing device 600 for implementing various embodiments described above. For example, computing device 600 may be used to implement devices client devices 105a-n. Computing device 600 may be a cellphone, a smartphone, a wearable device, an activity tracker or manager, a tablet, a personal digital assistant (PDA), a media player, or any other type of mobile computing device or combination thereof. As shown in FIG. 6, computing device 600 includes processing system 602, input/output (I/O) system 608, communication system 618, and storage system 620. These components may be coupled by one or more communication buses or signal lines.

Processing system 602, which can be implemented as one or more integrated circuits (e.g., a conventional microprocessor or microcontroller), controls the operation of computing device 600. As shown, processing system 602 includes one or more processors 604 and memory 606. Processors 604 are configured to run or execute various software and/or sets of instructions stored in memory 606 to perform various functions for computing device 600 and to process data.

Each processor of processors 604 may include one processing unit (e.g., a single core processor) or several processing units (e.g., a multicore processor). In some embodiments, processors 604 of processing system 602 may be implemented as independent processors while, in other embodiments, processors 604 of processing system 602 may be implemented as multiple processors integrate into a single chip. Still, in some embodiments, processors 604 of processing system 602 may be implemented as a combination of independent processors and multiple processors integrated into a single chip.

Memory 606 may be configured to receive and store software (e.g., operating system 622, applications 624, I/O module 626, communication module 628, etc. from storage system 620) in the form of program instructions that are loadable and executable by processors 604 as well as data generated during the execution of program instructions. In some embodiments, memory 606 may include volatile memory (e.g., random access memory (RAM)), non-volatile memory (e.g., read-only memory (ROM), programmable read-only memory (PROM), erasable programmable read-only memory (EPROM), electrically erasable programmable read-only memory (EEPROM), flash memory, etc.), or a combination thereof.

I/O system 608 is responsible for receiving input through various components and providing output through various components. As shown for this example, I/O system 608 includes display 610, one or more sensors 612, speaker 614, and microphone 616. Display 610 is configured to output visual information (e.g., a graphical user interface (GUI) generated and/or rendered by processors 604). In some embodiments, display 610 is a touch screen that is configured to also receive touch-based input. Display 610 may be implemented using liquid crystal display (LCD) technology, light-emitting diode (LED) technology, organic LED

(OLED) technology, organic electro luminescence (OEL) technology, or any other type of display technologies. Sensors 612 may include any number of different types of sensors for measuring a physical quantity (e.g., temperature, force, pressure, acceleration, orientation, light, radiation, etc.). Speaker 614 is configured to output audio information and microphone 616 is configured to receive audio input. One of ordinary skill in the art will appreciate that I/O system 608 may include any number of additional, fewer, and/or different components. For instance, I/O system 608 may include a keypad or keyboard for receiving input, a port for transmitting data, receiving data and/or power, and/or communicating with another device or component, an image capture component for capturing photos and/or videos, etc.

Communication system 618 serves as an interface for receiving data from, and transmitting data to, other devices, computer systems, and networks. For example, communication system 618 may allow computing device 600 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication system 618 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication system 618 may provide components configured for wired communication (e.g., Ethernet) in addition to or instead of components configured for wireless communication.

Storage system 620 handles the storage and management of data for computing device 600. Storage system 620 may be implemented by one or more non-transitory machine-readable mediums that are configured to store software (e.g., programs, code modules, data constructs, instructions, etc.) and store data used for, or generated during, the execution of the software.

In this example, storage system 620 includes operating system 622, one or more applications 624, I/O module 626, and communication module 628. Operating system 622 includes various procedures, sets of instructions, software components and/or drivers for controlling and managing general system tasks (e.g., memory management, storage device control, power management, etc.) and facilitates communication between various hardware and software components. Operating system 622 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Applications 624 can include any number of different applications installed on computing device 600. Examples of such applications may include a browser application, an address book application, a contact list application, an email application, an instant messaging application, a word processing application, JAVA-enabled applications, an encryption application, a digital rights management application, a voice recognition application, location determination application, a mapping application, a music player application, etc.

I/O module 626 manages information received via input components (e.g., display 610, sensors 612, and microphone 616) and information to be outputted via output components (e.g., display 610 and speaker 614). Communication module 628 facilitates communication with other devices via communication system 618 and includes various software components for handling data received from communication system 618.

One of ordinary skill in the art will realize that the architecture shown in FIG. 6 is only an example architecture of computing device 600, and that computing device 600 may have additional or fewer components than shown, or a different configuration of components. The various components shown in FIG. 6 may be implemented in hardware, software, firmware or any combination thereof, including one or more signal processing and/or application specific integrated circuits.

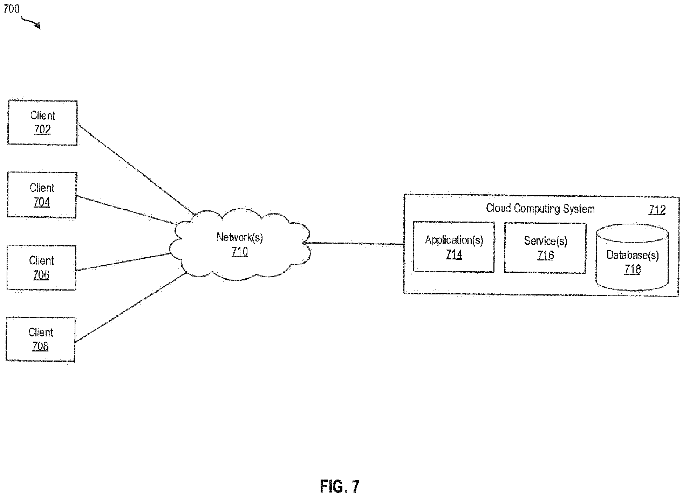

FIG. 7 illustrates an exemplary system 700 for implementing various embodiments described above. For example, client devices 702-708 may be used to implement client devices 105a-n and cloud computing system 712 may be used to implement computing system 110. As shown, system 700 includes client devices 702-708, one or more networks 710, and cloud computing system 712. Cloud computing system 712 is configured to provide resources and data to client devices 702-708 via networks 710. In some embodiments, cloud computing system 700 provides resources to any number of different users (e.g., customers, tenants, organizations, etc.). Cloud computing system 712 may be implemented by one or more computer systems (e.g., servers), virtual machines operating on a computer system, or a combination thereof.

As shown, cloud computing system 712 includes one or more applications 714, one or more services 716, and one or more databases 718. Cloud computing system 700 may provide applications 714, services 716, and databases 718 to any number of different customers in a self-service, subscription-based, elastically scalable, reliable, highly available, and secure manner.

In some embodiments, cloud computing system 700 may be adapted to automatically provision, manage, and track a customer's subscriptions to services offered by cloud computing system 700. Cloud computing system 700 may provide cloud services via different deployment models. For example, cloud services may be provided under a public cloud model in which cloud computing system 700 is owned by an organization selling cloud services and the cloud services are made available to the general public or different industry enterprises. As another example, cloud services may be provided under a private cloud model in which cloud computing system 700 is operated solely for a single organization and may provide cloud services for one or more entities within the organization. The cloud services may also be provided under a community cloud model in which cloud computing system 700 and the cloud services provided by cloud computing system 700 are shared by several organizations in a related community. The cloud services may also be provided under a hybrid cloud model, which is a combination of two or more of the aforementioned different models.

In some instances, any one of applications 714, services 716, and databases 718 made available to client devices 702-708 via networks 710 from cloud computing system 700 is referred to as a "cloud service." Typically, servers and systems that make up cloud computing system 700 are different from the on-premises servers and systems of a customer. For example, cloud computing system 700 may host an application and a user of one of client devices 702-708 may order and use the application via networks 710.

Applications 714 may include software applications that are configured to execute on cloud computing system 712 (e.g., a computer system or a virtual machine operating on a computer system) and be accessed, controlled, managed, etc. via client devices 702-708. In some embodiments, applications 714 may include server applications and/or mid-tier applications (e.g., HTTP (hypertext transport protocol) server applications, FTP (file transfer protocol) server applications, CGI (common gateway interface) server applications, JAVA server applications, etc.). Services 716 are software components, modules, application, etc. that are configured to execute on cloud computing system 712 and provide functionalities to client devices 702-708 via networks 710. Services 716 may be web-based services or on-demand cloud services.

Databases 718 are configured to store and/or manage data that is accessed by applications 714, services 716, and/or client devices 702-708. For instance, one or more storages 135-155 maybe stored in databases 718. Databases 718 may reside on a non-transitory storage medium local to (and/or resident in) cloud computing system 712, in a storage-area network (SAN), on a non-transitory storage medium local located remotely from cloud computing system 712. In some embodiments, databases 718 may include relational databases that are managed by a relational database management system (RDBMS). Databases 718 may be a column-oriented databases, row-oriented databases, or a combination thereof. In some embodiments, some or all of databases 718 are in-memory databases. That is, in some such embodiments, data for databases 718 are stored and managed in memory (e.g., random access memory (RAM)).

Client devices 702-708 are configured to execute and operate a client application (e.g., a web browser, a proprietary client application, etc.) that communicates with applications 714, services 716, and/or databases 718 via networks 710. This way, client devices 702-708 may access the various functionalities provided by applications 714, services 716, and databases 718 while applications 714, services 716, and databases 718 are operating (e.g., hosted) on cloud computing system 700. Client devices 702-708 may be computer system 500 or computing device 600, as described above by reference to FIGS. 5 and 6, respectively. Although system 700 is shown with four client devices, any number of client devices may be supported.

Networks 710 may be any type of network configured to facilitate data communications among client devices 702-708 and cloud computing system 712 using any of a variety of network protocols. Networks 710 may be a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.

The above description illustrates various embodiments of the present disclosure along with examples of how aspects of the present disclosure may be implemented. The above examples and embodiments should not be deemed to be the only embodiments, and are presented to illustrate the flexibility and advantages of various embodiments of the present disclosure as defined by the following claims. Based on the above disclosure and the following claims, other arrangements, embodiments, implementations and equivalents will be evident to those skilled in the art and may be employed without departing from the spirit and scope of the present disclosure as defined by the claims.

## Claims

1. A non-transitory machine-readable medium storing a program executable by at least one processing unit of a device, the program comprising sets of instructions for:
retrieving a plurality of transaction data from a storage, each transaction data in the plurality of transaction data comprising an item and an amount associated with the item;
based on the plurality of transaction data, determining a set of range of amounts; and
based on the set of range of amounts and a set of data objects, determining a set of categories, wherein each data object in the set of data objects belongs to a category in the set of categories.

2. The non-transitory machine-readable medium of claim 1, wherein determining the set of range of amounts comprises determining the set of range of amounts using a Bayesian Blocks algorithm,
wherein the program may further comprise sets of instructions for:
based on the amounts in the plurality of transaction data, determining a set of unique amounts;
sorting the set of unique amounts from smallest to largest;
for each pair of successive unique amounts in the set of unique amounts, determining a midpoint between the pair of successive unique amounts; and
using the midpoints as inputs to the Bayesian Blocks algorithm.

3. The non-transitory machine-readable medium of claim 1 or 2, wherein determining the set of categories comprises using a hierarchical density-based cluster selection (HDBSCAN) algorithm,
wherein the set of data objects may comprise a set of users, wherein the program may further comprise sets of instructions for:
receiving, from a client device, a request for a plurality of recommended item for a user;
determining the category associated with the user;
identifying transaction data associated with a set of users, wherein each user in the set of users is associated with the category;
determining a defined number of items having the most instances in the identified transaction data; and
providing the defined number of items to the client device.

4. The non-transitory machine-readable medium of any one of the preceding claims, wherein the set of data objects comprises a set of users associated with a first tenant, wherein the plurality of transaction data is a first plurality of transaction data associated with the first tenant, wherein the set of range of amounts is a first set of range of amounts, wherein the set of categories is a first set of categories, wherein the program further comprises sets of instructions for:
retrieving a second plurality of transaction data associated with a second tenant from the storage, each transaction data in the second plurality of transaction data comprising an item and an amount associated with the item;
based on the second plurality of transaction data, determining a second set of range of amounts; and
based on the second set of range of amounts and a second set of data objects associated with the second tenant, determining a second set of categories, wherein each data object in the second set of data objects belongs to a category in the second set of categories.

5. The non-transitory machine-readable medium of any one of the preceding claims, wherein determining the set of categories is further based on a set of activity data.

6. A method comprising:
retrieving a plurality of transaction data from a storage, each transaction data in the plurality of transaction data comprising an item and an amount associated with the item;
based on the plurality of transaction data, determining a set of range of amounts; and
based on the set of range of amounts and a set of data objects, determining a set of categories, wherein each data object in the set of data objects belongs to a category in the set of categories.

7. The method of claim 6, wherein determining the set of range of amounts comprises determining the set of range of amounts using a Bayesian Blocks algorithm, and/or
wherein determining the set of categories is further based on a set of activity data,
wherein the method may further comprise:
based on the amounts in the plurality of transaction data, determining a set of unique amounts;
sorting the set of unique amounts from smallest to largest;
for each pair of successive unique amounts in the set of unique amounts, determining a midpoint between the pair of successive unique amounts; and
using the midpoints as inputs to the Bayesian Blocks algorithm.

8. The method of claims 6 or 7, wherein determining the set of categories comprises using a hierarchical density-based cluster selection (HDBSCAN) algorithm,
wherein the set of data objects may comprise a set of users, wherein the method may further comprise:
receiving, from a client device, a request for a plurality of recommended item for a user;
determining the category associated with the user;
identifying transaction data associated with a set of users, wherein each user in the set of users is associated with the category;
determining a defined number of items having the most instances in the identified transaction data; and
providing the defined number of items to the client device.

9. The method of any one of claims 6 to 8, wherein the set of data objects comprises a set of users associated with a first tenant, wherein the plurality of transaction data is a first plurality of transaction data associated with the first tenant, wherein the set of range of amounts is a first set of range of amounts, wherein the set of categories is a first set of categories, wherein the method further comprises:
retrieving a second plurality of transaction data associated with a second tenant from the storage, each transaction data in the second plurality of transaction data comprising an item and an amount associated with the item;
based on the second plurality of transaction data, determining a second set of range of amounts; and
based on the second set of range of amounts and a second set of data objects associated with the second tenant, determining a second set of categories, wherein each data object in the second set of data objects belongs to a category in the second set of categories.

10. A system comprising:
a set of processing units; and
a non-transitory machine-readable medium storing instructions that when executed by at least one processing unit in the set of processing units cause the at least one processing unit to:
retrieve a plurality of transaction data from a storage, each transaction data in the plurality of transaction data comprising an item and an amount associated with the item;
based on the plurality of transaction data, determine a set of range of amounts; and
based on the set of range of amounts and a set of data objects, determine a set of categories, wherein each data object in the set of data objects belongs to a category in the set of categories.

11. The system of claim 10, wherein determining the set of range of amounts comprises determining the set of range of amounts using a Bayesian Blocks algorithm.

12. The system of claim 10 or 11, wherein the instructions further cause the at least one processing unit to:
based on the amounts in the plurality of transaction data, determine a set of unique amounts;
sort the set of unique amounts from smallest to largest;
for each pair of successive unique amounts in the set of unique amounts, determine a midpoint between the pair of successive unique amounts; and
use the midpoints as inputs to the Bayesian Blocks algorithm.

13. The system of any one of claims 10 to 12, wherein determining the set of categories comprises using a hierarchical density-based cluster selection (HDBSCAN) algorithm.

14. The system of any one of claims 10 to 13, wherein the set of data objects comprises a set of users, wherein the instructions further cause the at least one processing unit to:
receive, from a client device, a request for a plurality of recommended item for a user;
determine the category associated with the user;
identify transaction data associated with a set of users, wherein each user in the set of users is associated with the category;
determine a defined number of items having the most instances in the identified transaction data; and
provide the defined number of items to the client device.

15. The system of any one of claims 10 to 14, wherein the set of data objects comprises a set of users associated with a first tenant, wherein the plurality of transaction data is a first plurality of transaction data associated with the first tenant, wherein the set of range of amounts is a first set of range of amounts, wherein the set of categories is a first set of categories, wherein the instructions further cause the at least one processing unit to:
retrieve a second plurality of transaction data associated with a second tenant from the storage, each transaction data in the second plurality of transaction data comprising an item and an amount associated with the item;
based on the second plurality of transaction data, determine a second set of range of amounts; and
based on the second set of range of amounts and a second set of data objects associated with the second tenant, determine a second set of categories, wherein each data object in the second set of data objects belongs to a category in the second set of categories.
